# EUROPEAN PATENT SPECIFICATION

(11) **EP 2 924 266 B1**
(45) Date of publication and mention of the grant of the patent: **06.05.2020**
(21) Application number: 14191212.1
(22) Date of filing: 31.10.2014
(51) Int. Cl.: F02D 41/02, B60W 30/188, F02D 11/10

(54) **Control device for vehicle**
Steuervorrichtung für ein Fahrzeug
Dispositif de commande pour véhicule

(30) Priority: 07.11.2013 JP 2013230910
(43) Date of publication of application: 30.09.2015
(73) Proprietor: Toyota Jidosha Kabushiki Kaisha, Toyota-shi, Aichi 471-8571 (JP)
(72) Inventor: Ohkubo, Tadanao, Toyota-shi, Aichi 471-8571 (JP)
(74) Representative: TBK

(56) References cited:
- WO-A1-03/024736
- US-A1- 2002 095 248
- US-A1- 2005 065 691

## Description

### BACKGROUND OF THE INVENTION

### 1. Field of the Invention

The invention relates to a control device for a vehicle according to the preamble of claim 1.

### 2. Description of Related Art

A generic control device for a vehicle having the features of the preamble of claim 1 is known from WO 2013/027265 A1.

The control device for a vehicle in WO 2013/027265 A1 is configured to change an output characteristic of the engine according to a gear stage of the manual transmission. Specifically, the control device for a vehicle is configured to store an output characteristic map corresponding to each gear stage, and control an output torque of the engine by using the output characteristic map corresponding to the gear stage. Further control devices for vehicles are known from US 2002/095248 A1, WO 03/024736 A1 and US 2005/065691 A1.

### SUMMARY OF THE INVENTION

In the control device for a vehicle described above, when the output characteristic map is changed by shifting the gear stage, a torque difference may occur. To cope with this, in order to reduce the torque difference, it is conceived that control in which an engine torque is caused to gradually approach a target engine torque is performed. However, when an accelerator operation amount by a driver is sharply changed during execution of this control, the response of the engine torque may be delayed and drivability may be reduced.

It is an object of the present invention to further develop a control device according to the preamble of claim 1 such that the drivability is enhanced.

This object is achieved by a control device for a vehicle having the features of claim 1. Advantageous further developments are set out in the dependent claims.

The invention provides a control device for a vehicle capable of suppressing a reduction in drivability.

The invention relates to a control device for a vehicle including an engine and a transmission. The control device includes an electronic control unit (ECU). The ECU is configured to change an output characteristic of the engine based on a gear stage of the transmission along a target engine torque dependent on the gear stage after shifting and a current accelerator operation amount. The ECU is configured to execute a torque control of a required engine torque. The required engine torque is dependent on a current accelerator operation amount and starts from a value which is calculated based on the gear stage before shifting. In the torque control the required engine torque approaches the target engine torque such that the required engine torque matches the target engine torque of the gear stage established as a result of the shifting when the gear stage is shifted. A magnitude relationship between the target engine torque and the required engine torque is determined from the differences in torque values. The ECU is configured to (i) increase a control amount of the torque control such that the control amount of the torque control becomes larger while the difference between the required engine torque and the target engine torque becomes smaller over the elapsed time until the magnitude relationship between the target engine torque and the required engine torque is reversed, and (ii) end the torque control, when the magnitude relationship between the target engine torque and the required engine torque is reversed during execution of the torque control and take the target engine torque as the required engine torque. The ECU is configured to then control the engine so as to output the required engine torque.

With the configuration described above, when the accelerator operation amount by the driver is sharply changed during execution of the torque control and the magnitude relationship between the target engine torque and the required engine torque is reversed, it is possible to suppress a delay in the response of the engine torque by increasing the control amount of the torque control or ending the torque control, and hence it is possible to suppress a reduction in drivability.

In the control device, a case where the magnitude relationship is reversed during execution of the torque control may include a case where the transmission is shifted up and an accelerator operation amount is reduced during execution of the torque control.

With the configuration described above, it is possible to cause engine braking to work properly.

In the control device, the case where the magnitude relationship is reversed during execution of the torque control may include a case where the transmission is shifted down and the accelerator operation amount is increased during execution of the torque control.

With the configuration described above, it is possible to output the engine torque with excellent responsivity.

According to the control device for a vehicle of the invention, it is possible to suppress the reduction in drivability.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a view showing a schematic configuration of a vehicle that includes an ECU according to an embodiment of the invention;
FIG. 2 is a view showing a schematic configuration of an engine mounted on the vehicle of FIG. 1;
FIG. 3 is a skeleton view showing a schematic configuration of a manual transmission mounted on the vehicle of FIG. 1;
FIG. 4 is a view showing an outline of a shift pattern (shift gate shape) of the manual transmission mounted on the vehicle of FIG. 1;
FIG. 5 is a view showing a schematic configuration of a clutch device mounted on the vehicle of FIG. 1;
FIG. 6 is a block diagram showing a schematic configuration of an ECU mounted on the vehicle of FIG. 1;
FIG. 7 is a view schematically showing an example of an output characteristic map for a 3rd speed stage stored in a read only memory (ROM) of the ECU of FIG. 6;
FIG. 8 is a timing chart showing an example of a change operation of the output characteristic map at the time of shifting of the vehicle of the embodiment;
FIG. 9 is a timing chart showing an example of gradual change control when upshift is performed in the vehicle of the embodiment;
FIG. 10 is a timing chart showing an example of the gradual change control when downshift is performed in the vehicle of the embodiment;
FIG. 11 is a flowchart for explaining control at the time of change of the output characteristic map during shifting of the vehicle of the embodiment; and
FIG. 12 is a flowchart for explaining the gradual change control in step S7 of FIG. 11.

### DETAILED DESCRIPTION OF EMBODIMENTS

Hereinbelow, an embodiment of the invention will be described based on the drawings.

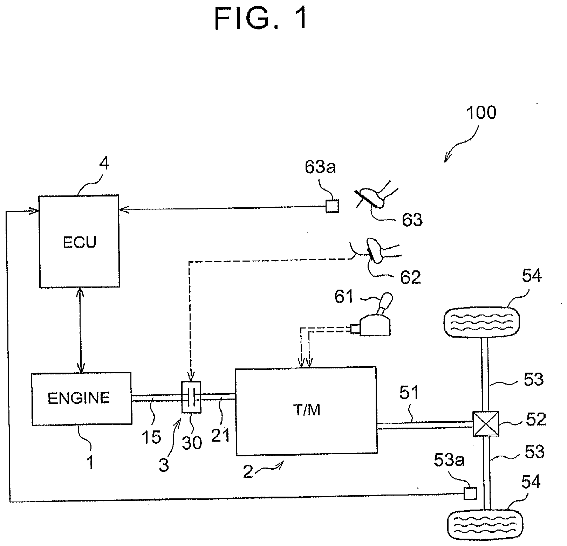

A vehicle 100 that includes an ECU 4 according to the embodiment of the invention will be described first with reference to FIGS. 1 to 7.

As shown in FIG. 1, the vehicle 100 includes an engine 1, a manual transmission 2, a clutch device 3, and the ECU 4. The vehicle 100 is, e.g., a front-engine rear-drive (FR) vehicle, and a driving force for running output from the engine 1 is transmitted to right and left rear wheels (driving wheels) 54 via the clutch device 3, the manual transmission 2, a propeller shaft 51, a differential device 52, and an axle 53.

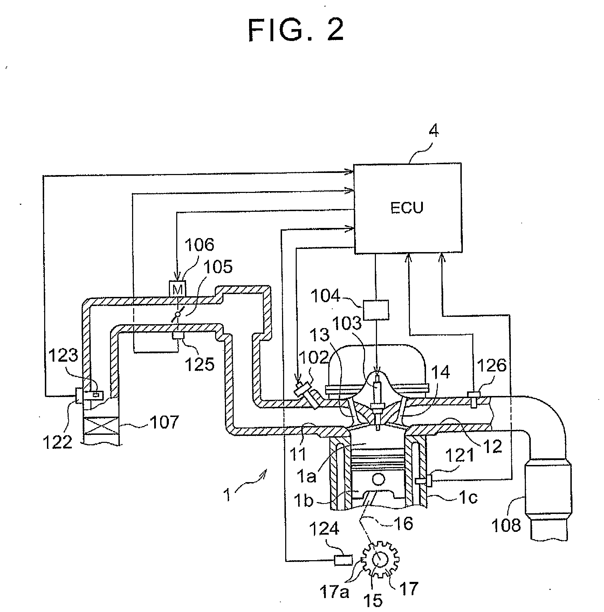

The engine (internal combustion engine) 1 is, e.g., a multi-cylinder gasoline engine and, as shown in FIG. 2, includes a piston 1b forming a combustion chamber 1a and a crankshaft 15 as an output shaft. The piston 1b is coupled to the crankshaft 15 via a connecting rod 16. The reciprocation of the piston 1b is converted to the rotary motion of the crankshaft 15 by the connecting rod 16.

The crankshaft 15 is provided with a signal rotor 17. A plurality of protrusions 17a are formed on the outer peripheral surface of the signal rotor 17 at regular intervals. An engine speed sensor 124 is disposed in the vicinity of a portion lateral to the signal rotor 17. The engine speed sensor 124 is, e.g., an electromagnetic pickup, and generates pulse-like signals (output pulse) equal in number to the protrusions 17a that pass through a position opposing the engine speed sensor 124 when the crankshaft 15 rotates. In addition, a water temperature sensor 121 that detects an engine water temperature (cooling water temperature) is provided in a cylinder block 1c of the engine 1.

A spark plug 103 is provided in the combustion chamber 1a of the engine 1. The ignition timing of the spark plug 103 is adjusted by an igniter 104. The igniter 104 is controlled by the ECU 4.

An intake passage 11 and an exhaust passage 12 are connected to the combustion chamber 1a. An intake valve 13 is provided between the intake passage 11 and the combustion chamber 1a. By opening or closing the intake valve 13, the intake passage 11 is communicated with or separated from the combustion chamber 1a. An exhaust valve 14 is provided between the exhaust passage 12 and the combustion chamber 1a. By opening or closing the exhaust valve 14, the exhaust passage 12 is communicated with or separated from the combustion chamber 1a.

In the intake passage 11, an air cleaner 107, an air flow meter 122, an intake air temperature sensor 123, and an electronically controlled throttle valve 105 are disposed. In the exhaust passage 12, an O₂ sensor 126 that detects an oxygen concentration in exhaust gas and a three-way catalyst 108 are disposed.

The throttle valve 105 is driven by a throttle motor 106. With this, the opening of the throttle valve 105 (throttle opening) is adjusted, and the intake air mount of the engine 1 is adjusted according to the throttle opening. The throttle opening is detected by a throttle opening sensor 125. The drive of the throttle motor 106 is controlled by the ECU 4.

In addition, in the intake passage 11, an injector (fuel injection valve) 102 controlled by the ECU 4 is provided. Fuel having a specific pressure is supplied to the injector 102 from a fuel tank (not shown) by a fuel pump, and the fuel is injected to the intake passage 11 by the injector 102. The fuel injected by the injector 102 is mixed with intake air to become an air-fuel mixture, and the air-fuel mixture is introduced into the combustion chamber 1a of the engine 1. The air-fuel mixture introduced into the combustion chamber 1a is ignited by the spark plug 103, and combusted and exploded. By the combustion and explosion of the air-fuel mixture in the combustion chamber 1a, the piston 1b is caused to reciprocate and the crankshaft 15 is rotated.

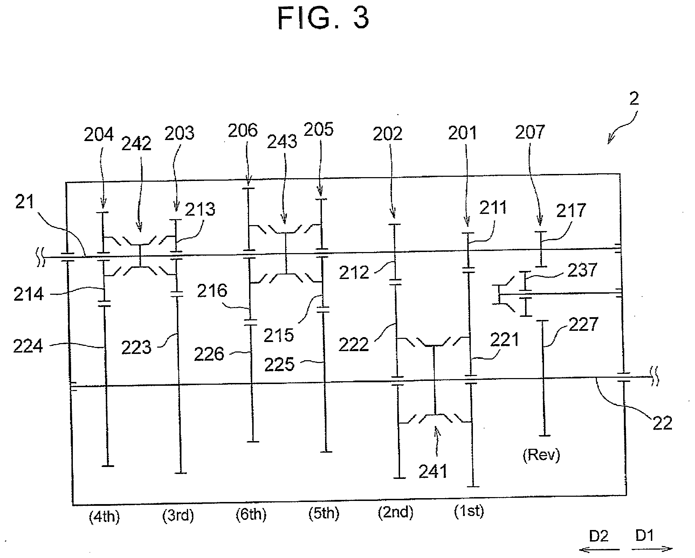

The manual transmission 2 is, e.g., a synchromesh manual transmission and, as shown in FIG. 3, includes forward gear stages 201 to 206 having different speed ratios (gear ratios), a reverse gear stage 207, and synchromesh mechanisms 241 to 243. In the manual transmission 2, an input shaft 21 is coupled to the crankshaft 15 (see FIG. 1) via the clutch device 3, and an output shaft 22 is coupled to the propeller shaft 51 (see FIG. 1).

The forward gear stages 201 to 206 are gear stages for establishing the 1st to 6th speed stages. The forward gear stages 201 to 206 have drive gears 211 to 216 on the side of the input shaft 21, and driven gears 221 to 226 on the side of the output shaft 22. The drive gears 211 to 216 are meshed with the driven gears 221 to 226.

The drive gears 211 and 212 are attached to the input shaft 21 so as to rotate integrally with the input shaft 21. On the other hand, the drive gears 213 to 216 are attached to the input shaft 21 so as to be rotatable relative to the input shaft 21. The driven gears 221 and 222 ate attached to the output shaft 22 so as to be rotatable relative to the output shaft 22. On the other hand, the driven gears 223 to 226 are attached to the output shaft 22 so as to rotate integrally with the output shaft 22.

The reverse gear stage 207 includes a reverse drive gear 217, a reverse driven gear 227, and a reverse idler gear 237.

The synchromesh mechanisms 241 to 243 include sleeves, synchronizer rings, and clutch hubs. The synchromesh mechanism 241 is provided for selectively establishing the 1st and 2nd speed stages, the synchromesh mechanism 242 is provided for selectively establishing the 3rd and 4th speed stages, and the synchromesh mechanism 243 is provided for selectively establishing the 5th and 6th speed stages.

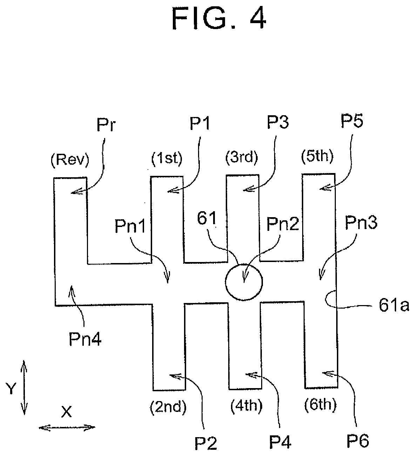

The manual transmission 2 is mechanically coupled to a shift lever 61 (see FIG. 1) provided in a vehicle compartment, the shift lever 61 is operated by a driver, and the gear stage is thereby selected. The shift lever 61 is disposed in, e.g., a shift gate 61a shown in FIG. 4.

The shift lever 61 is configured to be movable in a select direction (X direction) and a shift direction (Y direction). In the select direction, select positions Pn1 to Pn4 are arranged in line. In the shift direction corresponding to the select position Pn1, a 1st speed position P1 and a 2nd speed position P2 are disposed. In the shift direction corresponding to the select position Pn2, a 3rd speed position P3 and a 4th speed position P4 are disposed. In the shift direction corresponding to the select position Pn3, a 5th speed position P5 and a 6th speed position P6 are disposed. In the shift direction corresponding to the select position Pn4, a reverse position Pr is disposed.

When the shift lever 61 is moved to the 1st speed position P1, the synchromesh mechanism 241 of the manual transmission 2 is actuated to one side (in a D1 direction in FIG. 3), and the 1st speed stage is established. When the shift lever 61 is moved to the 2nd speed position P2, the synchromesh mechanism 241 is actuated to the other side (in a D2 direction in FIG. 3), and the 2nd speed stage is established.

In addition, when the shift lever 61 is moved to the 3rd speed position P3, the synchromesh mechanism 242 of the manual transmission 2 is actuated to one side (in the D1 direction in FIG. 3), and the 3rd speed stage is established. When the shift lever 61 is moved to the 4th speed position P4, the synchromesh mechanism 242 is actuated to the other side (in the D2 direction in FIG. 3), and the 4th speed stage is established.

Further, when the shift lever 61 is moved to the 5th speed position P5, the synchromesh mechanism 243 of the manual transmission 2 is actuated to one side (in the D1 direction in FIG. 3), and the 5th speed stage is established. When the shift lever 61 is moved to the 6th speed position P6, the synchromesh mechanism 243 is actuated to the other side (in the D2 direction in FIG. 3), and the sixth speed stage is established.

Furthermore, when the shift lever 61 is moved to the reverse position Pr, the synchromesh mechanisms 241 to 243 of the manual transmission 2 are brought into a neutral state and the reverse idler gear 237 of the manual transmission 2 is actuated, whereby the reverse stage is established.

. In this embodiment, the select position Pn2 serves as a neutral position. When the shift lever 61 is moved to the neutral position Pn2, the synchromesh mechanisms 241 to 243 of the manual transmission 2 are brought into the neutral state, and a neutral state in which the manual transmission 2 does not perform torque transmission between the input shaft 21 and the output shaft 22 is established.

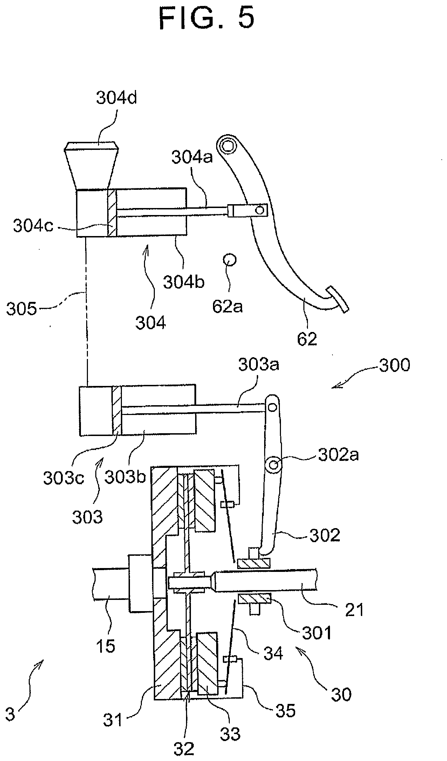

As shown in FIG. 5, the clutch device 3 includes a clutch 30 and a clutch actuation device 300 that actuates the clutch 30 according to a depression operation of a clutch pedal 62.

The clutch 30 is, e.g., a dry single-plate friction clutch, and is provided between the crankshaft 15 and the input shaft 21 of the manual transmission 2. The clutch 30 includes a flywheel 31, a clutch disk 32, a pressure plate 33, a diaphragm spring 34, and a clutch cover 35.

The flywheel 31 and the clutch cover 35 are attached to the crankshaft 15 as the input shaft of the clutch 30 so as to rotate integrally with each other. The clutch disk 32 is spline-fitted to the input shaft 21 of the manual transmission 2 as the output shaft of the clutch 30. Accordingly, the clutch disk 32 can slide along an axial direction while rotating integrally, with the input shaft 21. The pressure plate 33 is disposed between the clutch disk 32 and the clutch cover 35. The pressure plate 33 is biased toward the flywheel 31 by the outer peripheral portion of the diaphragm spring 34. The biasing force to the pressure plate 33 by the diaphragm spring 34 can be controlled by the clutch actuation device 300.

The clutch actuation device 300 includes a release bearing 301, a release fork 302, a clutch release cylinder 303, and a clutch master cylinder 304. ' The release bearing 301 is attached to the input shaft 21 so as to be slidable along the axial direction. The release fork 302 is rotatably supported using a shaft 302a in the vicinity of the release bearing 301. One end portion of the release fork 302 is in contact with the release bearing 301, and the other end portion thereof is coupled to a rod 303a of the clutch release cylinder 303.

The clutch release cylinder 303 is configured such that a piston 303c or the like is incorporated in the internal portion of a cylinder body 303b. The rod 303a is coupled to the piston 303c. The clutch release cylinder 303 is connected to the clutch master cylinder 304 via a hydraulic pipe 305.

The clutch master cylinder 304 is configured such that a piston 304c or the like is incorporated in the internal portion of a cylinder body 304b. One end portion of a rod 304a is coupled to the piston 304c. The other end portion of the rod 304a is coupled to the clutch pedal 62. A reserve tank 304d that supplies a clutch fluid (oil) as a working fluid into the cylinder body 304b is provided in the upper portion of the cylinder body 304b.

When the clutch pedal 62 is depressed by a driver, the piston 304c moves in the cylinder body 304b, and the clutch master cylinder 304 thereby generates an oil pressure. The oil pressure generated by the clutch master cylinder 304 is transmitted to the clutch release cylinder 303 via the hydraulic pipe 305.

In the clutch device 3, the release fork 302 is actuated in response to the oil pressure in the clutch release cylinder 303, and engagement/disengagement operations of the clutch 30 are thereby performed.

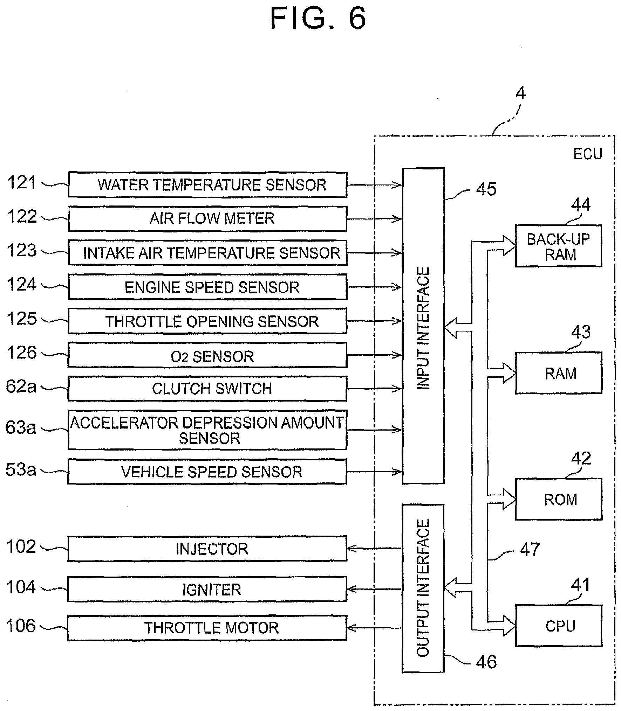

The ECU 4 is configured to perform operation control of the engine 1 and the like. As shown in FIG. 6, the ECU 4 includes a central processing unit (CPU) 41, a ROM 42, a random access memory (RAM) 43, a back-up-RAM 44, an input interface 45, and an output interface 46, and they are connected to one another via a bus 47. Note that the ECU 4 is an example of the "control device for a vehicle" of the invention.

The CPU 41 executes arithmetic processing based on various control programs and maps stored in the ROM 42. In the ROM 42, various control programs and maps that are consulted when the various control programs are executed are stored. The RAM 43 is a memory that temporarily stores the result of the arithmetic processing by the CPU 41 and detection results of individual sensors. The back-up RAM 44 is a nonvolatile memory that stores data to be retain when the ignition is turned OFF.

To the input interface 45, the water temperature sensor 121, the air flow meter 122, the intake air temperature sensor 123, the engine speed sensor 124, the throttle opening sensor 125, the O₂ sensor 126, a clutch switch 62a, an accelerator depression amount sensor 63a, and a vehicle speed sensor 53a are connected.

The clutch switch 62a is provided for detecting that the depression amount (operation amount) of the clutch pedal 62 (see FIG. 5) by the driver reaches a specific amount. The accelerator depression amount sensor 63a is provided for detecting the accelerator depression amount as the depression amount (operation amount) of the accelerator pedal 63 (see FIG. 1) by the driver. The vehicle speed sensor 53a is provided for detecting the speed of the vehicle 100.

The injector 102, the igniter 104, and the throttle motor 106 are connected to the output interface 46. The ECU 4 controls the fuel injection amount from the injector 102, the ignition timing by the igniter 104, and the throttle opening by the throttle motor 106 based on the detection results of the various sensors described above to thereby control the operation state of the engine 1.

Herein, the ECU 4 is configured to change an output characteristic of the engine 1 according to the gear stage of the manual transmission 2. Specifically, the ECU 4 is configured to store an output characteristic map (torque map) corresponding to each gear stage in the ROM 42, and control an output torque of the engine 1 by using the output characteristic map corresponding to the gear stage. That is, the ECU 4 has six output characteristic maps for the 1st to 6th speed stages, and changes the output characteristic map according to the gear stage.

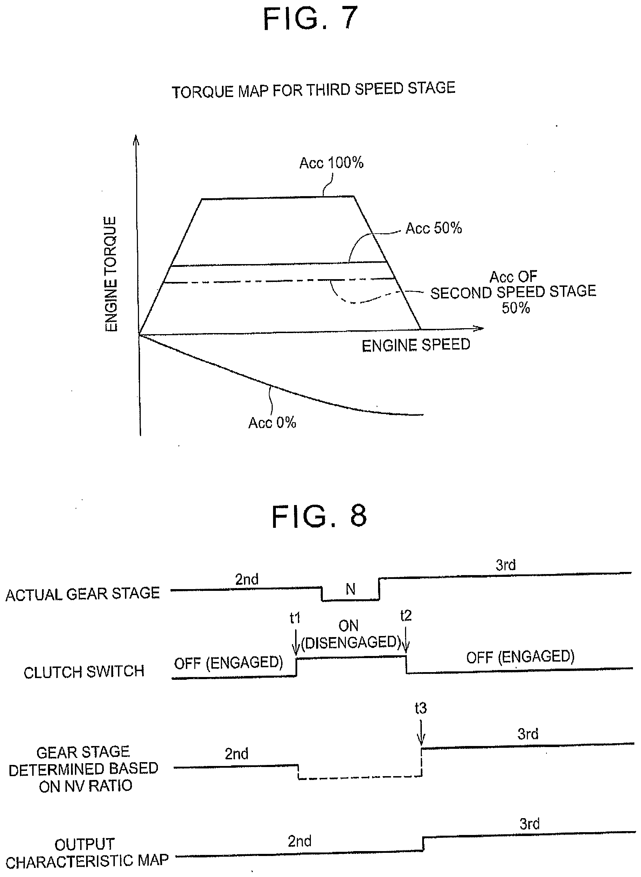

The output characteristic map is, e.g., a map that shows the relationship between the engine speed using the accelerator depression amount (the accelerator operation amount by the driver) as a parameter and the engine torque, and is capable of deriving the engine torque based on the accelerator depression amount and the engine speed. FIG. 7 schematically shows an example of the output characteristic map for the 3rd speed stage.

When the output characteristic maps of the individual gear stages have the same accelerator depression amount, the output torque in the output characteristic map on a high gear side is set to be larger than the output torque in the output characteristic map on a low gear side. For example, as shown in FIG. 7, when the 3rd speed stage and the 2nd speed stage have the accelerator depression amount of 50%, the output torque from the engine 1 of the 3rd speed stage is larger than that of the 2nd speed stage.

This is because, when the gear stage on the high gear side is established, the speed ratio of the manual transmission 2 is small so that a torque amplification effect in the manual transmission 2 is small, and hence the output torque of the engine 1 is set to be large. In contrast to this, when the gear stage on the low gear side is established, the speed ratio of the manual transmission 2 is large so that the torque amplification effect in the manual transmission 2 is large, and hence the output torque of the engine 1 is set to be small. That is, the output torque from the engine 1 is controlled such that a change in the torque output to rear wheels 54 (see FIG. 1) resulting from a difference in the gear stage of the manual transmission 2 is suppressed. With this, the output of the driving force required by the driver to the rear wheels 54 is facilitated when the gear stage on the high gear side is established, and the output of the excessive driving force to the rear wheels 54 is suppressed when the gear stage on the low gear side is established.

Note that, in the output characteristic map of each gear stage, the characteristics when the accelerator depression amount is 0% and 100% are mechanically determined by the engine 1, and hence the individual gear stages have substantially the same characteristics.

In addition, the ECU 4 is configured to determine the gear stage of the manual transmission 2 based on an NV ratio (ratio between the engine speed and the vehicle speed). Consequently, when the clutch 30 (see FIG. 1) is disengaged, it become difficult to determine the gear stage of the manual transmission 2. To cope with this, when the clutch 30 is disengaged, the ECU 4 continuously uses the output characteristic map used at this point and, when the clutch 30 is engaged thereafter, the ECU 4 determines the gear stage of the manual transmission 2 based on the NV ratio, and sets (changes) the output characteristic map. Specifically, for example, when the clutch switch 62a is OFF and the gear stage calculated based on the NV ratio has been continued for a specific time period, the ECU 4 determines that the gear stage is established in the manual transmission 2.

Further, when the gear stage of the manual transmission 2 is shifted and the output characteristic map is changed, the ECU 4 is configured to perform gradual change control in which the output torque from the engine 1 is gradually changed. The gradual change control is performed in order to reduce a torque difference caused by changing the output characteristic map, and the gradual change control is performed such that the engine torque (required engine torque required of the engine 1) gradually approaches the target engine torque in the gear stage (the output characteristic map) after the shifting. Note that the gradual change control is an example of "torque control" of the invention.

Herein, the target engine torque is an engine torque serving as the target during the execution of the gradual change control, and is calculated based on the output characteristic map after the shifting. The required engine torque during the execution of the gradual change control is determined by adding a gradual change amount to the calculated value calculated based on the output characteristic map before the shifting. The gradual change amount is increased according to an elapsed time of the gradual change control, and the required engine torque gradually approaches the target engine torque. Accordingly, in the gradual change control, the output characteristic maps before and after the shifting are used. Note that the required engine torque after the end of the gradual change control is calculated based on the output characteristic map after the shifting.

When the magnitude relationship between the target engine torque and the current engine torque is reversed during the execution of the gradual change control, the ECU 4 of the embodiment is configured to end the gradual change control. With this, since the gradual change control is ended when the acceleration operation amount by the driver is sharply changed during the execution of the gradual change control and the magnitude relationship between the target engine torque and the current engine torque is reversed, it is possible to suppress a delay in the response of the engine torque.

Note that the case where the magnitude relationship between the target engine torque and the current engine torque is reversed includes the case where the gear stage of the manual transmission 2 is shifted to an upshift side and the accelerator operation amount is reduced during the execution of the gradual change control, and the case where the gear stage of the manual transmission 2 is shifted to a downshift side and the accelerator operation amount is increased during the execution of the gradual change control.

Next, a detailed description will be given of the change operation of the output characteristic map resulting from shifting of the gear stage of the manual transmission 2 and the gradual change control after the change of the output characteristic map.

FIG. 8 is a timing chart showing an example of the change operation of the output characteristic map at the time of shifting of the vehicle of the embodiment. A description will be given of an example of the change operation of the output characteristic map at the time of the shifting of the vehicle 100 of the embodiment first with reference to FIG. 8. Note that the following description will be given by using the case where the gear stage is shifted to the 3rd speed stage from the 2nd speed stage established in the manual transmission 2 as an example.

Before the start of the shifting operation by the driver, the clutch 30 (see FIG. 1) is engaged, and the actual gear stage of the manual transmission 2 (see FIG. 1) is the 2nd speed stage. At this point, the clutch switch 62a (see FIG. 5) is OFF, and the gear stage determined based on the NV ratio by the ECU 4 (see FIG. 6) is the 2nd speed stage. Accordingly, in the ECU 4, the output torque of the engine 1 is controlled by using the output characteristic map for the 2nd speed stage.

Subsequently, at a time point t1 when the clutch pedal 62 (see FIG. 5) is depressed by the driver, the clutch switch 62a is turned ON, and the clutch 30 is disengaged. At this point, since it is difficult to determine the gear stage based on the NV ratio, the output characteristic map used when the clutch switch 62a is turned ON is continuously used in the ECU 4. That is, the output torque of the engine 1 is controlled by using the output characteristic map for the 2nd speed stage until it becomes possible to determine the gear stage based on the NV ratio.

Thereafter, the shift lever 61 (see FIG. 4) is moved from the 2nd speed position P2 to the 3rd speed position P3 via the select positions Pn1 and Pn2 by the driver. With this, the synchromesh mechanism 241 (see FIG. 3) is brought into the neutral state, the synchromesh mechanism 242 (see FIG. 3) is actuated to one side, and the actual gear stage of the manual transmission 2 is thereby shifted up to the 3rd speed stage from the 2nd speed stage via the neutral.

Subsequently, at a time point t2 when the depression of the clutch pedal 62 by the driver is released, the clutch switch 62a is turned OFF, and the clutch 30 is engaged. Then, the ECU 4 calculates the gear stage based on the NV ratio and, at a time point t3 when the calculated gear stage has been continued for the specific time period, the ECU 4 determines the gear stage of the manual transmission 2 based on the NV ratio. In an example of FIG. 8, the ECU 4 determines that the gear stage is the 3rd speed stage based on the NV ratio, and the output characteristic map is changed from the output characteristic map for the 2nd speed stage to the output characteristic map for the 3rd speed stage. Subsequently, when the output characteristic map is changed to the output characteristic map for the 3rd speed stage, the gradual change control is executed.

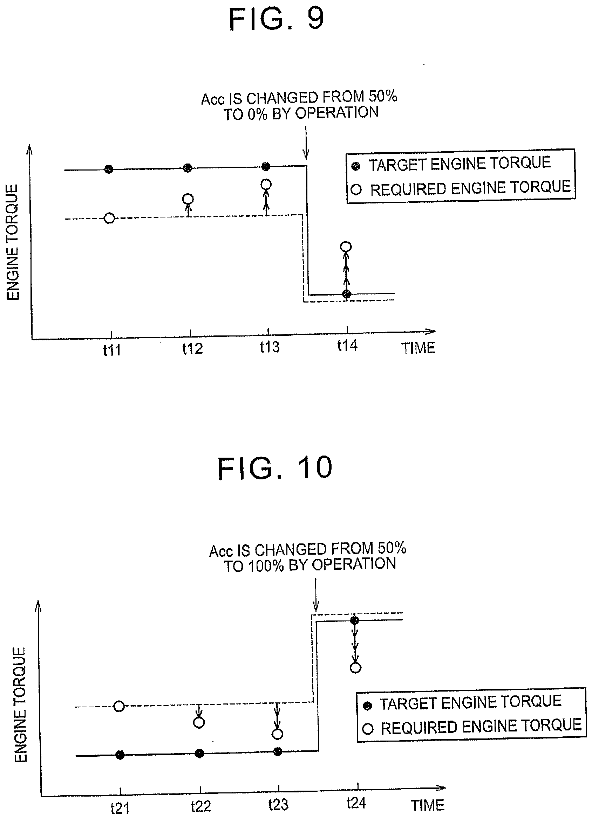

FIG. 9 is a timing chart showing an example of the gradual change control when upshift is performed in the vehicle of the embodiment. FIG. 10 is a timing chart showing an example of the gradual change control when downshift is performed in the vehicle of the embodiment.

A description will be given of an example of the gradual change control when upshift is performed in the vehicle 100 of the embodiment. Note that the following description will be given by using the case where the gear stage is shifted up from the 2nd speed stage to the 3rd speed stage and the accelerator depression amount is sharply changed from 50% to 0% during the execution of the gradual change control as an example.

When the gear stage of the manual transmission 2 is shifted up from the 2nd speed stage to the 3rd speed stage, the output characteristic map is changed from the output characteristic map for the 2nd speed stage to the output characteristic map for the 3rd speed stage, and the gradual change control is started.

Subsequently, at a time point t11 when the first control cycle has arrived since the start of the gradual change control, the ECU 4 calculates the target engine torque and the required engine torque. Note that, at the time point t11, the accelerator depression amount is set to 50% by the operation of the driver.

The target engine torque at the time point t11 is calculated by using the output characteristic map for the 3rd speed stage after the shifting. Specifically, the target engine torque is calculated from the engine speed and the accelerator depression amount at the time point t11 by using the output characteristic map for the 3rd speed stage.

The required engine torque at the time point t11 is calculated by using the output characteristic map for the 2nd speed stage before the shifting. Specifically, the required engine torque is calculated from the engine speed and the accelerator depression amount at the time point t11 by using the output characteristic map for the 2nd speed stage.

Note that, since the output characteristic map for the 3rd speed stage is set so as to have the engine torque larger than that of the output characteristic map for the 2nd speed stage, the target engine torque at the time point t11 is larger than the required engine torque. At the time point t11, the engine 1 is controlled so as to output the required engine torque.

Thereafter, at a time point t12 when the next control cycle has arrived, the ECU 4 calculates the target engine torque and the required engine torque. Note that, at the time point t12, the accelerator depression amount is set to 50% by the operation of the driver.

The target engine torque at the time point t12 is calculated by using the output characteristic map for the 3rd speed stage after the shifting. Specifically, the target engine torque is calculated from the engine speed and the accelerator depression amount at the time point t12 by using the output characteristic map for the 3rd speed stage. In an example of FIG. 9, the accelerator depression amounts at the time points t11 and t12 are equal to each other, and the target engine torques at the time points t11 and t12 are equal to each other.

The required engine torque at the time point t12 is calculated by using the output characteristic map for the 2nd speed stage before the shifting, and the gradual change amount is added to the calculated value. The calculated value is calculated from the engine speed and the accelerator depression amount at the time point t12 by using the output characteristic map for the 2nd speed stage. In the example of FIG. 9, the accelerator depression amounts at the time points t11 and t12 are equal to each other, and the calculated values at the time points t11 and t12 are equal to each other. The gradual change amount is added such that the required engine torque approaches the target engine torque. Accordingly, in the case of the upshift, since the target engine torque is larger than the required engine torque, the required engine torque is determined by adding the gradual change amount to the calculated value. The gradual change amount is set so as to be increased according to the elapsed time of the gradual change control (the number of arrivals of the control cycle). At the time point t12, a reference gradual change value is set as the gradual change amount. Note that the reference gradual change value is a preset value that can prevent the occurrence of the torque difference even when the torque is increased or decreased by the torque corresponding to the reference gradual change value.

At the time point t12, the engine 1 is controlled so as to output the required engine torque. In the example of FIG. 9, the required engine torque at the time point t12 is made closer to the target engine torque than the required engine torque at the time point t11 by the engine torque corresponding to the reference gradual change value.

Thereafter, at a time point t13 when the next control cycle has arrived, the ECU 4 calculates the target engine torque and the required engine torque. Note that, at the time point t13, the accelerator depression amount is set to 50% by the operation of the driver.

The target engine torque at the time point t13 is calculated by using the output characteristic map for the 3rd speed stage after the shifting. Specifically, the target engine torque is calculated from the engine speed and the accelerator depression amount at the time point t13 by using the output characteristic map for the 3rd speed stage. In the example of FIG. 9, the accelerator depression amounts at the time points t11 to t13 are equal to one another, and the target engine torques at the time points t11 to t13 are equal to one another.

The required engine torque at the time point t13 is calculated by using the output characteristic map for the 2nd speed stage before the shifting, and the gradual change amount is added to the calculated value. The calculated value is calculated from the engine speed and the accelerator depression amount at the time point t13 by using the output characteristic map for the 2nd speed stage. In the example of FIG. 9, the accelerator depression amounts at the time points t11 to t13 are equal to one another, and the calculated values at the time points t11 to t13 are equal to one another. The gradual change amount is increased by the amount corresponding to the reference gradual change value every time the control cycle arrives, and a value obtained by doubling the reference gradual change value is set as the gradual change amount.

At the time point t13, the engine 1 is controlled so as to output the required engine torque. In the example of FIG. 9, the required engine torque at the time point t13 is made closer to the target engine torque than the required engine torque at the time point t12 by the engine torque corresponding to the reference gradual change value.

Thereafter, at a time point t14 when the next control cycle has arrived, the ECU 4 calculates the target engine torque and the required engine torque. Herein, at the time point t14, the accelerator operation by the driver is released, and the accelerator depression amount is 0%.

The target engine torque at the time point t14 is calculated by using the output characteristic map for the 3rd speed stage after the shifting. Specifically, the target engine torque is calculated from the engine speed and the accelerator depression amount at the time point t14 by using the output characteristic map for the 3rd speed stage. In the example of FIG. 9, the accelerator depression amount at the time point t14 is smaller than those at the time points t11 to t13, and hence the engine torque at the time point t14 is smaller than those at the time points t11 to t13.

The required engine torque at the time point t14 is calculated by using the output characteristic map for the 2nd speed stage before the shifting, and the gradual change amount is added to the calculated value. The calculated value is calculated from the engine speed and the accelerator depression amount at the time point t14 by using the output characteristic map for the 2nd speed stage. In the example of FIG. 9, since the accelerator depression amount at the time point t14 is smaller than those at the time points t11 to t13, the calculated value at the time point 114 is smaller than those at the time points t11 to t13. Note that the accelerator depression amount is 0% so that almost no engine torque difference due to a difference in the output characteristic map is generated, and hence the target engine torque at the time point t14 and the calculated value at the time point t14 are close to each other. A value obtained by tripling the reference gradual change value is set as the gradual change amount.

Herein, at the time point t14, the required engine torque is larger than the target engine torque, and the magnitude relationship between the target engine torque and the required engine torque is reversed. With this, the gradual change control is ended. Thereafter, the required engine torque is calculated by using the output characteristic map for the 3rd speed stage after the shifting, and the engine 1 is controlled so as to output the required engine torque.

-Next, with reference to FIG. 10, a description will be given of an example of the gradual change control when downshift is performed in the vehicle 100 of the embodiment. Note that the following description will be given by using the case where the gear stage is shifted down from the 3rd speed stage to the 2nd speed stage and the accelerator depression amount is sharply changed from 50% to 100% during the execution of the gradual change control as an example.

When the gear stage of the manual transmission 2 is shifted down from the 3rd speed stage to the 2nd speed stage, the output characteristic map is changed from the output characteristic map for the 3rd speed stage to the output characteristic map for the 2nd speed stage, and the gradual change control is started.

At a time point t21 when the first control cycle has arrived since the start of the gradual change control, the ECU 4 calculates the target engine torque and the required engine torque. Note that, at the time point t21, the accelerator depression amount is set to 50% by the operation of the driver.

The target engine torque at the time point t21 is calculated by using the output characteristic map for the 2nd speed stage after the shifting. Specifically, the target engine torque is calculated from the engine speed and the accelerator depression amount at the time point t21 by using the output characteristic map for the 2nd speed stage.

The required engine torque at the time point t21 is calculated by using the output characteristic map for the 3rd speed stage before the shifting. Specifically, the required engine torque is calculated from the engine speed and the accelerator depression amount at the time point t21 by using the output characteristic map for the 3rd speed stage.

The output characteristic map for the 2nd speed stage is set such that the engine torque is smaller than that of the output characteristic map for the 3rd speed stage, and hence the target engine torque at the time point t21 is smaller than the required engine torque. At the time point t21, the engine 1 is controlled so as to output the required engine torque.

Thereafter, at a time point t22 when the next control cycle has arrived, the ECU 4 calculates the target engine torque and the required engine torque. Note that, at the time point t22, the accelerator depression amount is set to 50% by the operation of the driver.

The target engine torque at the time point t22 is calculated by using the output characteristic map for the 2nd speed stage after the shifting. Specifically, the target engine torque is calculated from the engine speed and the accelerator depression amount at the time point t22 by using the output characteristic map for the 2nd speed stage. In an example of FIG. 10, the accelerator depression amounts at the time points t21 and t22 are equal to each other, and the target engine torques at the time points t21 and t22 are equal to each other.

The required engine torque at the time point t22 is calculated by using the output characteristic map for the 3rd speed stage before the shifting, and the gradual change amount is added to the calculated value. The calculated value is calculated from the engine speed and the accelerator depression amount at the time point t22 by using the output characteristic map for the 3rd speed stage. In the example of FIG. 10, the accelerator depression amounts at the time points t21 and t22 are equal to each other, and the calculated values at the time points t21 and t22 are equal to each other. The gradual change amount is added such that the required engine torque approaches the target engine torque. Accordingly, in the case of the downshift, since the target engine torque is smaller than the required engine torque, the required engine torque is determined by subtracting the gradual change amount from the calculated value. In addition, the gradual change amount is set so as to be increased according to the elapsed time of the gradual change control (the number of arrivals of the control cycle). At the time point t22, the reference gradual change value is set as the gradual change amount.

At the time point t22, the engine 1 is controlled so as to output the required engine torque. In the example of FIG. 10, the required engine torque at the time point t22 is made closer to the target engine torque than the required engine torque at the time point t21 by the engine torque corresponding to the reference gradual change value.

Thereafter, at a time point t23 when the next control cycle has arrived, the ECU 4 calculates the target engine torque and the required engine torque. Note that, at the time point t23, the accelerator depression amount is set to 50% by the operation of the driver.

The target engine torque at the time point t23 is calculated by using the output characteristic map for the 2nd speed stage after the shifting. Specifically, the target engine torque is calculated from the engine speed and the accelerator depression amount at the time point t23 by using the output characteristic map for the 2nd speed stage. In the example of FIG. 10, the accelerator depression amounts at the time points t21 to t23 are equal to one another, and the target engine torques at the time points t21 to t23 are equal to one another.

The required engine torque at the time point t23 is calculated by using the output characteristic map for the 3rd speed stage before the shifting, and the gradual change amount is increased from the calculated value. The calculated value is calculated from the engine speed and the accelerator depression amount at the time point t23 by using the output characteristic map for the 3rd speed stage. In the example of FIG. 10, the accelerator depression amounts at the time points t21 to t23 are equal to one another, and the calculated values at the time points t21 to t23 are equal to one another. The gradual change amount is increased by the amount corresponding to the reference gradual change value every time the control cycle arrives, and a value obtained by doubling the reference gradual change value is set as the gradual change amount.

At the time point t23, the engine 1 is controlled so as to output the required engine torque. In the example of FIG. 10, the required engine torque at the time point t23 is made closer to the target engine torque than the required engine torque at the time point t22 by the engine torque corresponding to the reference gradual change value.

Thereafter, at a time point t24 when the next control cycle has arrived, the ECU 4 calculates the target engine torque and the required engine torque. Herein, at the time point t24, the accelerator depression amount is set to 100% by the operation of the driver.

The target engine torque at the time point t24 is calculated by using the output characteristic map for the 2nd speed stage after the shifting. Specifically, the target engine torque is calculated from the engine speed and the accelerator depression amount at the time point t24 by using the output characteristic map for the 2nd speed stage. In the example of FIG. 10, the accelerator depression amount at the time point t24 is larger than those at the time points t21 to t23, and hence the target engine torque at the time point t24 is increased to be larger than those at the time points t21 to t23.

The required engine torque at the time point t24 is calculated by using the output characteristic map for the 3rd speed stage before the shifting, and the gradual change amount is increased from the calculated value. The calculated value is calculated from the engine speed and the accelerator depression amount at the time point t24 by using the output characteristic map for the 3rd speed stage. In the example of FIG. 10, the accelerator depression amount at the time point t24 is larger than those at the time points t21 to t23, and hence the calculated value at the time point t24 is increased to be larger than those at the time points t21 to t23. The accelerator depression amount is 100% so that almost no engine torque difference due to a difference in the output characteristic map is generated, and hence the target engine torque at the time point t24 and the calculated value at the time point t24 are close to each other. A value obtained by tripling the reference gradual change value is set as the gradual change amount.

Herein, at the time point t24, the required engine torque is smaller than the target engine torque, and the magnitude relationship between the target engine torque and the required engine torque is reversed. With this, the gradual change control is ended. Thereafter, the required engine torque is calculated by using the output characteristic map for the 2nd speed stage after the shifting, and the engine 1 is controlled so as to output the required engine torque.

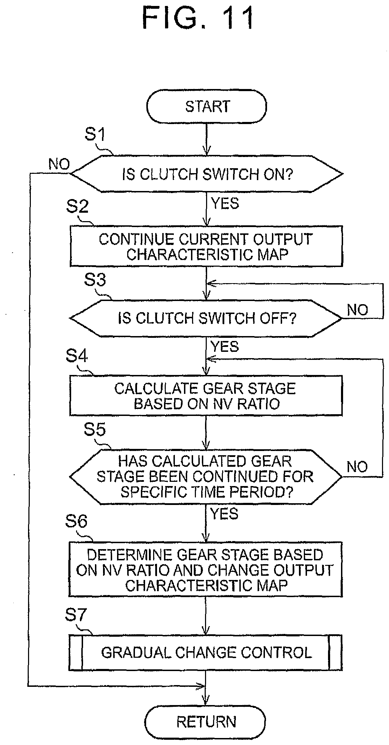

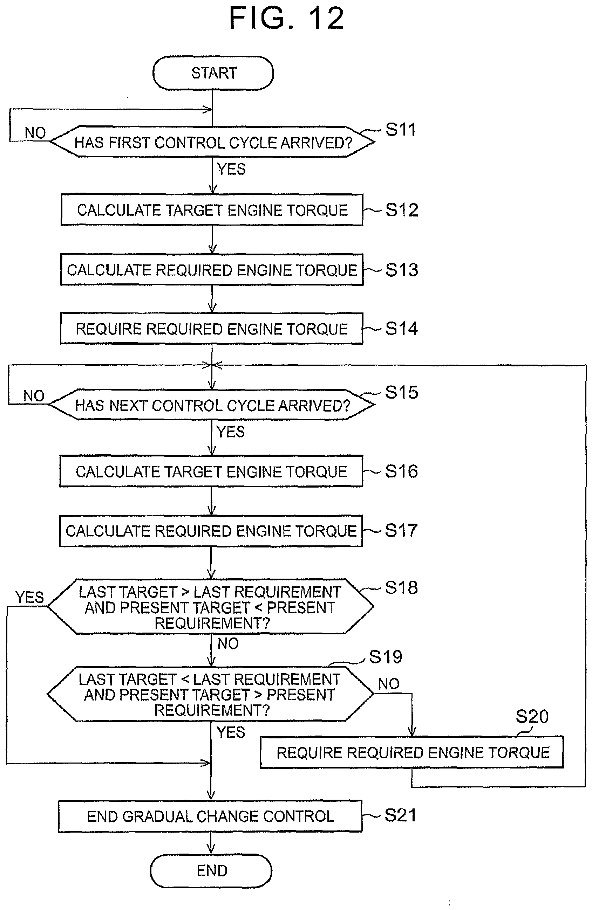

FIG. 11 is a flowchart for explaining control at the time of change of the output characteristic map during the shifting of the vehicle of the embodiment. FIG. 12 is a flowchart for explaining the gradual change control at step S7 of FIG. 11.

Next, with reference to FIGS. 11 and 12, a description will be given of a control flow at the time of change of the output characteristic map. Note that the following individual steps are executed by the ECU 4.

In step S1 of FIG. 11, it is determined whether or not the clutch switch 62a is turned ON first. That is, it is determined whether or not the clutch pedal 62 is operated by the driver. When it is determined that the clutch switch 62a is ON, the clutch 30 is disengaged, and the flow moves to step S2. On the other hand, when it is determined that the clutch switch 62a is not ON, the clutch 30 is in an engaged state, and the flow moves to Return.

Next, in step S2, the output characteristic map at the time point when the clutch switch 62a is turned ON is continuously used.

Next, in step S3, it is determined whether or not the clutch switch 62a is turned OFF. That is, it is determined whether or not the operation of the clutch pedal 62 by the driver is released. When it is determined that the clutch switch 62a is OFF, the clutch 30 is engaged, and the flow moves to step S4. On the other hand, when it is determined that the clutch switch 62a is not OFF, a state where the clutch 30 is disengaged is continued, and step S3 is repeatedly performed. That is, a standby state is continued until the clutch switch 62a is turned OFF.

Next, in step S4, the gear stage is calculated based on the NV ratio.

Subsequently, in step S5, it is determined whether or not the calculated gear stage has been continued for a specific time period. Note that the specific time period is a time period with which the probability of change of the gear stage calculated based on the NV ratio is high, and is a preset time period. That is, the specific time period is a time period required until it becomes possible to properly determine the gear stage of the manual transmission 2 based on the NV ratio. When it is determined that the calculated gear stage has been continued for the specific time period, the flow moves to step S6. On the other hand, when it is determined that the calculated gear stage has not been continued for the specific time period, the flow returns to step S4.

Next, in step S6, the gear stage is determined based on the NV ratio, and the output characteristic map is changed to that corresponding to the gear stage.

Next, in step S7, the gradual change control is executed. Subsequently, when the gradual change control is ended, the flow moves to Return.

In the gradual change control, in step S11 of FIG. 12, it is determined whether or not the first control cycle has arrived first. When it is determined that the first control cycle has arrived, the flow moves to step S12. On the other hand, when it is determined that the first control cycle has not arrived, step S11 is repeatedly performed. That is, the standby state is continued until the first control cycle arrives.

Next, in step S12, the target engine torque is calculated. The target engine torque is calculated by using the output characteristic map after the shifting.

Next, in step S13, the required engine torque is calculated. The required engine torque is calculated by using the output characteristic map before the shifting.

Subsequently, in step S14, the engine 1 is controlled so as to output the required engine torque..

Thereafter, in step S15, it is determined whether or not the next control cycle has arrived. When it is .determined that the next control cycle has arrived, the flow moves to step S16. On the other hand, when it is determined that the next control cycle has not arrived, step S15 is repeatedly performed. That is, the standby state is continued until the next control cycle arrives.

Next, in step S16, the target engine torque is calculated. The target engine torque is calculated by using the output characteristic map after the shifting.

Next, in step S17, the required engine torque is calculated. The required engine torque is calculated by using the output characteristic map before the shifting, and the gradual change amount is added to the calculated value. The gradual change amount is added such that the required engine torque approaches the target engine torque, and is set so as to be increased according to the elapsed time of the gradual change control (the number of arrivals of the control cycle).

Subsequently, in step S18, it is determined whether or not a condition that the last (last cycle) target engine torque is larger than the last required engine torque and the present (present cycle) target engine torque is smaller than the present required engine torque is satisfied. When it is determined that the condition is satisfied, since the magnitude relationship between the target engine torque and the required engine torque is reversed (e.g., the time point t14 of FIG. 9), the flow moves to step S21. On the other hand, when it is determined that the condition is not satisfied, the low moves to step S19.

In step S19, it is determined whether or not a condition that the last target engine torque is smaller than the last required engine torque and the present target engine torque is larger than the present required engine torque is satisfied. When it is determined that the condition is satisfied, since the magnitude relationship between the target engine torque and the required engine torque is reversed (e.g., the time point t24 of FIG. 10), the flow moves to step S21. On the other hand, when it is determined that the condition is not satisfied, since the magnitude relationship between the target engine torque and the required engine torque is not reversed (e.g., the time points t12 and t13 of FIG. 9 and the time points t22 and t23 of FIG. 10), the flow moves to step S20.

In step S20, the engine 1 is controlled so as to output the required engine torque calculated in step S17. Thereafter, the flow returns to step S15, and the gradual change control is continued.

On the other hand, in step S21, the gradual change control is ended, and the flow moves to End. Note that, after the end of the gradual change control, the required engine torque is calculated by using the output characteristic map after the shifting, and the engine 1 is controlled so as to output the required engine torque.

In the embodiment, as described above, when the gear stage of the manual transmission 2 is shifted to the upshift side, the accelerator depression amount is reduced during the execution of the gradual change control, and the magnitude relationship between the target engine torque and the required engine torque is reversed, since it is possible to suppress a delay in the response of the engine torque by ending the gradual change control, it is possible to suppress a reduction in drivability. That is, when the accelerator depression amount is reduced in the state where the required engine torque is gradually increased so as to approach the high target engine torque as a result of the upshift, the target engine torque becomes smaller than the required engine torque, and the gradual change control is continued, the gradual change amount that has been accumulated in the gradual change control leads to convergence delay. Hence it is possible to suppress the delay in the response of the engine torque by ending the gradual change control. As a result, when the accelerator operation mount by the driver is reduced during the execution of the gradual change control based on the upshift, it is possible to suppress the output of a redundant driving force and cause engine braking to work properly.

In addition, in the embodiment, when the gear stage of the manual transmission 2 is shifted to the downshift side, the accelerator depression amount is increased during the execution of the gradual change control, and the magnitude relationship between the target engine torque and the required engine torque is reversed, since it is possible to suppress the delay in the response of the engine torque by ending the gradual change control, it is possible to suppress the reduction in drivability. That is, when the accelerator depression amount is increased in the state where the required engine torque is gradually reduced so as to approach the low target engine torque as a result of the downshift, the target engine torque becomes larger than the required engine torque, and the gradual change control is continued, the gradual change amount that has been accumulated in the gradual change control leads to the convergence delay. Hence it is possible to suppress the delay in the response of the engine torque by ending the gradual change control. As a result, when the accelerator operation amount by the driver is increased during the execution of the gradual change control based on the downshift, it is possible to output the engine torque with excellent responsivity.

It is noted that the embodiment disclosed herein is illustrative in every respect and does not form any ground for limitative interpretation. Therefore, the technical scope of the invention is not to be construed only based on the embodiment described above but to be delimited based on the terms of the claims. In addition, the technical scope of the invention is not to be construed only based on the embodiment described above but to be delimited based on the terms of the claims.

For example, the embodiment has shown the example in which the vehicle 100 is the FR vehicle. The invention is not limited thereto. The vehicle 100 may also be a front-engine front-drive (FF) vehicle or a four-wheel drive (4WD) vehicle.

The embodiment has shown the example in which the gradual change control is ended when the magnitude relationship between the target engine torque and the current engine torque is reversed during the execution of the gradual change control.

Further, the embodiment has shown the example in which the clutch device 3 operated using the clutch pedal 62 is provided. The invention is not limited thereto. The clutch device that is automatically actuated by an actuator (not shown) or the like may also be provided.

Furthermore, the embodiment has shown the example in which the gear stage is determined based on the NV ratio. The invention is not limited thereto. When a shift position sensor (not shown) that detects a shift position selected by the shift lever 61 is provided, the gear stage may be determined using the shift position sensor.

Additionally, the embodiment has shown the example in which it is determined whether or not the clutch 30 is engaged by using the clutch switch 62a. The invention is not limited thereto. When a stroke sensor (not shown) that detects a stroke position of the clutch 30 is provided, it may be determined whether or not the clutch 30 is engaged by using the stroke sensor.

In addition, the embodiment has shown the example in which it is determined whether or not the gear stage calculated based on the NV ratio has been continued for the specific time period when the clutch switch 62a is OFF. The invention is not limited thereto. It may be determined whether or not the gear stage calculated based on the NV ratio has been continued for the specific time period irrespective of the state of the clutch 30.

Further, the embodiment has shown the example in which the gradual change amount is increased by the amount corresponding to the reference gradual change value every time the control cycle arrives and an increase rate corresponding to the elapsed time of the gradual change control is thereby constant. The invention is not limited thereto. The increase rate may be changed according to the elapsed time of the gradual change control.

Furthermore, in the embodiment, the ECU 4 may be configured by a plurality of ECUs.

Additionally, the embodiment has shown the example in which the engine 1 is the gasoline engine. The invention is not limited thereto. The engine may also be a diesel engine.

In addition, in the embodiment, when the magnitude relationship between the target engine torque and the required engine torque is reversed, the required engine torque may be replaced with the target engine torque (i.e., the target engine torque is set as the new required engine torque), and the gradual change control may be ended after the required torque subjected to the replacement (i.e., the target engine torque) is required of the engine 1. That is, the current engine torque may be replaced with the target engine torque and the gradual change control may be ended.

The invention is usable as the control device for the vehicle that includes the engine and the transmission.

An ECU (4) is configured to change an output characteristic of an engine (1) according to a gear stage of a manual transmission (2) and, when the gear stage of the manual transmission (2) is shifted, execute torque control in which an engine torque is caused to approach a target engine torque of the gear stage established as a result of the shifting. When a magnitude relationship between the target engine torque and the current engine torque is reversed during execution of the torque control, the ECU (4) is configured to increase a control amount of the torque control such that the control amount of the torque control becomes larger than the control amount before the magnitude relationship is reversed, or end the torque control.

## Claims

1. A control device for a vehicle, the vehicle including an engine (1) and a transmission (2) having a clutch device (3), either manually operated or automatically operated by an actuator or the like, the control device comprising:
an electronic control unit (4) configured to
(a) change an output characteristic of the engine (1) based on a gear stage of the transmission (2) along a target engine torque dependent on the gear stage and a current accelerator operation amount,
(b) execute a torque control of a required engine torque which is dependent on the current accelerator operation amount and starts from a value of the engine torque calculated based on the gear stage before shifting, in which torque control the required engine torque approaches the target engine torque such that the required engine torque matches the target engine torque of the gear stage established as a result of the shifting when the gear stage is shifted,
(c) determine a magnitude relationship between the target engine torque and the required engine torque from the differences in torque values,
(d) increase a control change amount of the torque control, being the difference between the required engine torque and the target torque corresponding to the gear ratio before shifting, such that the control change amount of the torque control becomes larger while the difference between the required engine torque and the target engine torque after shifting becomes smaller over the elapsed time,
**characterised in that** when there is a change of the current accelerator operation amount the torque control continues until the magnitude relationship between the target engine torque after shifting and the required engine torque is reversed,
wherein the torque control is ended, when the magnitude relationship between the target engine torque and the required engine torque is reversed during execution of the torque control and the target engine torque is taken as the required engine torque, and
(e) control the engine (1) so as to output the required engine torque.

2. The control device according to claim 1, wherein
the case where the magnitude relationship is reversed during execution of the torque control includes a case where the transmission (2) is shifted up and the accelerator operation amount is reduced during execution of the torque control.

3. The control device according to claim 1 or 2, wherein
the case where the magnitude relationship is reversed during execution of the torque control includes a case where the transmission (2) is shifted down and the accelerator operation amount is increased during execution of the torque control.

## Patentansprüche

1. Steuerungsvorrichtung für ein Fahrzeug, wobei das Fahrzeug eine Kraftmaschine (1) und ein Getriebe (2) aufweist, das eine Kupplungsvorrichtung (3) hat, die entweder manuell betätigt wird oder durch ein Stellglied oder Ähnliches automatisch betätigt wird, wobei die Steuerungsvorrichtung aufweist:
eine elektronische Steuerungseinheit (4), die konfiguriert ist,
(a) eine Abgabecharakteristik der Kraftmaschine (1) auf der Basis einer Gangstufe des Getriebes (2) entlang eines Soll-Kraftmaschinendrehmoments zu ändern, das von der Gangstufe und einem gegenwärtigen Beschleunigerbetätigungsbetrag abhängig ist,
(b) eine Drehmomentsteuerung eines erforderlichen Kraftmaschinendrehmoments auszuführen, welches von dem gegenwärtigen Beschleunigerbetätigungsbetrag abhängt und von einem Wert des Kraftmaschinendrehmoments startet, der auf der Basis der Gangstufe vor einem Schalten berechnet wird, in welcher Drehmomentsteuerung das erforderliche Kraftmaschinendrehmoment das Soll-Kraftmaschinendrehmoment annähert, sodass das erforderliche Kraftmaschinendrehmoment mit dem Soll-Kraftmaschinendrehmoment der Gangstufe übereinstimmt, die als ein Ergebnis des Schaltens eingestellt wird, wenn die Gangstufe geschaltet wird,
(c) eine Größenbeziehung zwischen dem Soll-Kraftmaschinendrehmoment und dem erforderlichen Kraftmaschinendrehmoment aus den Differenzen der Drehmomentwerte zu bestimmen,
(d) einen Steuerungsänderungsbetrag der Drehmomentsteuerung zu erhöhen, der die Differenz zwischen dem erforderlichen Kraftmaschinendrehmoment und dem Soll-Drehmoment ist, das dem Gangverhältnis vor dem Schalten entspricht, sodass der Steuerungsänderungsbetrag der Drehmomentsteuerung größer wird, während die Differenz zwischen dem erforderlichen Kraftmaschinendrehmoment und dem Soll-Kraftmaschinendrehmoment nach dem Schalten über die verstrichene Zeit kleiner wird, **dadurch gekennzeichnet, dass**
wenn es eine Änderung des gegenwärtigen Beschleunigerbetätigungsbetrags gibt, die Drehmomentsteuerung fortfährt, bis die Größenbeziehung zwischen dem Soll-Kraftmaschinendrehmoment nach dem Schalten und dem erforderlichen Kraftmaschinendrehmoment umgekehrt wird,
wobei die Drehmomentsteuerung beendet wird, wenn die Größenbeziehung zwischen dem Soll-Kraftmaschinendrehmoment und dem erforderlichen Kraftmaschinendrehmoment während der Ausführung der Drehmomentsteuerung umgekehrt wird und das Soll-Kraftmaschinendrehmoment als das erforderliche Kraftmaschinendrehmoment genommen wird, und
(e) die Kraftmaschine (1) zu steuern, um das erforderliche Kraftmaschinendrehmoment auszugeben.

2. Steuerungsvorrichtung nach Anspruch 1, wobei
der Fall, in dem die Größenbeziehung während der Ausführung der Drehmomentsteuerung umgekehrt wird, einen Fall umfasst, in dem das Getriebe (2) hochgeschaltet wird und der Beschleunigerbetätigungsbetrag während der Ausführung der Drehmomentsteuerung verringert wird.

3. Steuerungsvorrichtung nach Anspruch 1 oder 2, wobei
der Fall, in dem die Größenbeziehung während der Ausführung der Drehmomentsteuerung umgekehrt wird, einen Fall umfasst, in dem das Getriebe (2) runtergeschaltet wird und der Beschleunigerbetätigungsbetrag während der Ausführung der Drehmomentsteuerung erhöht wird.

## Revendications

1. Dispositif de commande d'un véhicule, le véhicule comportant un moteur (1) et une boîte à vitesses (2) munie d'un dispositif d'embrayage (3), actionnée soit manuellement, soit automatiquement par un actionneur ou similaire, le dispositif de commande comprenant :
une unité de commande électronique (4) configurée pour
(a) modifier une caractéristique de sortie du moteur (1) sur la base d'un étage d'engrenage de la boîte à vitesses (2) tout au long d'un couple moteur cible dépendant de l'étage d'engrenage et d'une quantité courante d'actionnement d'accélérateur,
(b) exécuter une commande de couple d'un couple moteur requis, qui dépend de la quantité courante d'actionnement d'accélérateur, et qui part d'une valeur du couple moteur calculée sur la base de l'étage d'engrenage avant le changement de vitesse, où dans la commande de couple, le couple moteur requis se rapproche du couple moteur cible de sorte que le couple moteur requis s'accorde avec le couple moteur cible de l'étage d'engrenage établi, à la suite du changement de vitesse lorsque l'étage d'engrenage est changé,
(c) déterminer une relation de magnitude entre le couple moteur cible et le couple moteur requis à partir des différences de valeurs de couple,
(d) augmenter une quantité de modification de commande de la commande de couple, à savoir la différence entre le couple moteur requis et le couple cible correspondant au rapport d'engrenage avant le changement de vitesse, de sorte que la quantité de modification de commande de la commande de couple devienne plus importante, tandis que la différence entre le couple moteur requis et le couple moteur cible, après le changement de vitesse, devient moins importante au cours du temps écoulé,
**caractérisé en ce que**, lorsqu'il y a une modification de la quantité courante d'actionnement d'accélérateur, la commande de couple se poursuit jusqu'à ce que la relation de magnitude entre le couple moteur cible suivant le changement de vitesse et le couple moteur requis s'inverse,
dans lequel la commande de couple se termine lorsque la relation de magnitude entre le couple moteur cible et le couple moteur requis s'inverse pendant l'exécution de la commande de couple, et le couple moteur cible est pris comme couple moteur requis, et
(e) commander le moteur (1) de manière à délivrer le couple moteur requis.

2. Dispositif de commande selon la revendication 1, dans lequel
le cas où la relation de magnitude est inversée pendant l'exécution de la commande de couple comporte un cas où la boîte à vitesses (2) passe à la vitesse supérieure et où la quantité d'actionnement d'accélérateur est réduite pendant l'exécution de la commande de couple.

3. Dispositif de commande selon la revendication 1 ou 2, dans lequel
le cas où la relation de magnitude est inversée pendant l'exécution de la commande de couple comporte un cas où la boîte à vitesses (2) passe à la vitesse inférieure et où la quantité d'actionnement d'accélérateur est augmentée pendant l'exécution de la commande de couple.
